# EUROPEAN PATENT APPLICATION

(11) **EP 2 056 491 A1**
(43) Date of publication of application: **06.05.2009**
(21) Application number: 07792975.0
(22) Date of filing: 24.08.2007
(51) Int. Cl.: H04B 7/26, H04Q 7/36

(54) **CORE NETWORK DEVICE, RADIO COMMUNICATION BASE STATION DEVICE, AND RADIO COMMUNICATION METHOD**

(30) Priority: 25.08.2006 JP 2006229811; 05.10.2006 JP 2006274080; 16.11.2006 JP 2006310271
(71) Applicant: Panasonic Corporation, Kadoma-shi Osaka 571-8501 (JP)
(72) Inventor: KANAZAWA, Takeshi, 2-1-61,Shiromi,Chuo-ku,Osaka 540-6207 (JP); FUKUI, Akito, 2-1-61, Shiromi, Chuo-ku, Osaka 540-6207 (JP); AOYAMA, Takahisa, 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2007/066446
(87) International publication number: WO 2008/023792

(57) **Abstract**

It is possible to provide a core network device, a radio communication base station device, and a radio communication method which can improve the radio resource use efficiency of the entire network without increasing UE battery consumption. According to the devices and the method, a user quantity counting unit (163) of UPE (160) counts the number of UE which have performed a position registration in each position registration area containing a plurality of cells. A user quantity comparing unit (164) selects MCT if the counted UE quantity is not smaller than a predetermined threshold value and SCT if the counted UE quantity is smaller than the predetermined threshold value, thereby appropriately performing switching between SCT and MCT in accordance with the UE quantity. Only when the SCT is selected by the UPE (160), eNB counts the number of users in the cell managed by the local device.

## Description

### Technical Field

The present invention relates to a core network apparatus, radio communication base station apparatus and radio communication method for providing a multimedia broadcast/multicast service (MBMS).

### Background Art

UMTS (Universal Mobile Telecommunications System) is a third-generation mobile communication system which has evolved from GSM (Global System for Mobile Communications), which is the European standard and aims at providing further improved mobile communication services based on a GSM core network (CN) and a WCDMA (Wideband Code Division Multiple Access) wireless access technique.

UMTS provides MBMS. MBMS is a more developed service for not only broadcasting multimedia data but also multicasting multimedia to users who subscribe to applicable services. For example, MBMS provides a news channel, music channel, movie channel or the like.

Non-Patent Documents 1, 2 and 3 describe an architecture and processing procedure relating to MBMS.

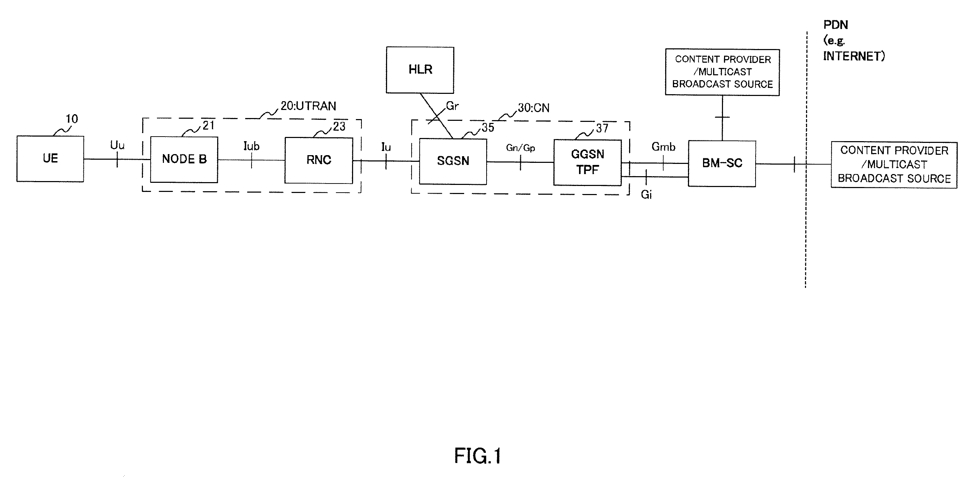

FIG.1 shows a reference architecture that supports MBMS on a 3GPP UMTS network. As shown in FIG.1, UMTS is constructed of terminal (User Equipment: UE) 10, UTRAN 20 and core network (Core Network: CN) 30.

UTRAN 20 is comprised of one or more radio network sub-systems (RNS), and an RNS is comprised of one radio network controller (RNC) 23 and one or more Nodes B (base stations) 21 under control of appropriate RNC 23.

RNC 23 is responsible for allocation and management of radio resources and plays a role as an access point with respect to CN 30.

Node B 21 receives information transferred from the physical layer of UE 10 via the uplink, or on the contrary, transfers data to UE 10 via the downlink. Node B 21 assumes a role of access point of UTRAN for UE 10.

UTRAN 20 makes up and maintains a radio access bearer (RAB) for a call between UE 10 and CN 30.

CN 30 requests end-to-end service quality (Quality of Service: QoS) requirements from the RAB and the RAB supports the QoS requirements set up by CN 30. Therefore, UTRAN 20 makes up and maintains the RAB, and therefore meets the end-to-end QoS requirements.

MBMS is provided via a packet switching service. When providing a packet switching service, RNC 23 is connected to SGSN (Serving GPRS Support Node) 35 and GGSN (Gateway GPRS Support Node) 37 of CN 30. SGSN 35 supports communication with RNC 23 and GGSN 37 manages connections with other packet switching networks such as the Internet.

MBMS is a downward dedicated service that provides a streaming or background service for a plurality of UEs 10 using a common or dedicated downward channel.

MBMS is divided into a broadcast mode and a multicast mode. In the MBMS broadcast mode, multimedia data can be easily transferred to all users located in a broadcast area. On the other hand, in the MBMS multicast mode, multimedia data can be easily transferred to a specific user group located in a multicast area. Here, the broadcast area is an area where a broadcast service is available and the multicast area is an area where a multicast service is available.

Users who try to receive an MBMS receive a service announcement provided by the network. Here, the "service announcement" refers to reporting a list of services to be provided in the future and related information to UEs. Furthermore, users receive service notification provided by the network. Here, "service notification" refers to notifying the UEs of information about the broadcast data to be transferred.

Furthermore, users who want to receive an MBMS in the multicast mode must particularly join a multicast subscription group. The "multicast subscription group" refers to a group of users who have completed a subscription procedure.

A user who has joined the multicast subscription group can participate in (join) a multicast group to receive a specific multicast service, that is, a user group who receive a specific multicast service. The "multicast group" refers to a group of users who receive a specific multicast service. "Joining" refers to joining a multicast group who gather to receive a specific multicast service and is also called "MBMS multicast activation." Therefore, the user can receive specific multicast data through MBMS multicast activation (or joining).

RNC 23 transfers MBMS user data to UE 10 via Node B 21 through the user plane of the UTRAN protocol. In order to transfer the MBMS user data, UTRAN 20 makes up and maintains a radio bearer for a call between UE 10 and CN 30. The MBMS radio bearer is transferred only through a downlink.

The MBMS radio bearer plays a role of transferring user data of one specific MBMS transferred from CN 30 to UTRAN 20 only to specific UEs.

Furthermore, in the case of multicast mode, UTRAN 20 needs to confirm the presence of UEs in the entire service area to deliver MBMS user data only to Node B 21 where users are located. Therefore, UTRAN 20 counts the number of UEs. UTRAN 20 reports UE 10 that UTRAN 20 is currently counting when providing information about MBMS using a MBMS common control channel or performing paging to a specific MBMS group.

Upon receiving the information that counting is being performed on the corresponding service from the service notification on MBMS, UE 10 transfers an RRC connection request message to UTRAN through an uplink common channel to report UTRAN 20 that UE 10 wants to receive the corresponding MBMS and thereby sets up an RRC connection (connection between the RRC entity of UE 10 and RRC entity of UTRAN 20). Here, UE 10 reports to UTRAN 20 that UE 10 wants to receive the corresponding MBMS using an RRC connection request message.

Therefore, UTRAN 20 recognizes UE 10 that has transferred the RRC connection request message and thereby recognizes the presence of the user who requests a specific MBMS within the cell and sets up an MBMS radio bearer if at least one user exists.

By the way, the 3GPP is currently studying a next-generation core network and radio access network, and as for an MBMS transfer method, the 3GPP is also studying the following two transfer methods as standard candidates along with this.

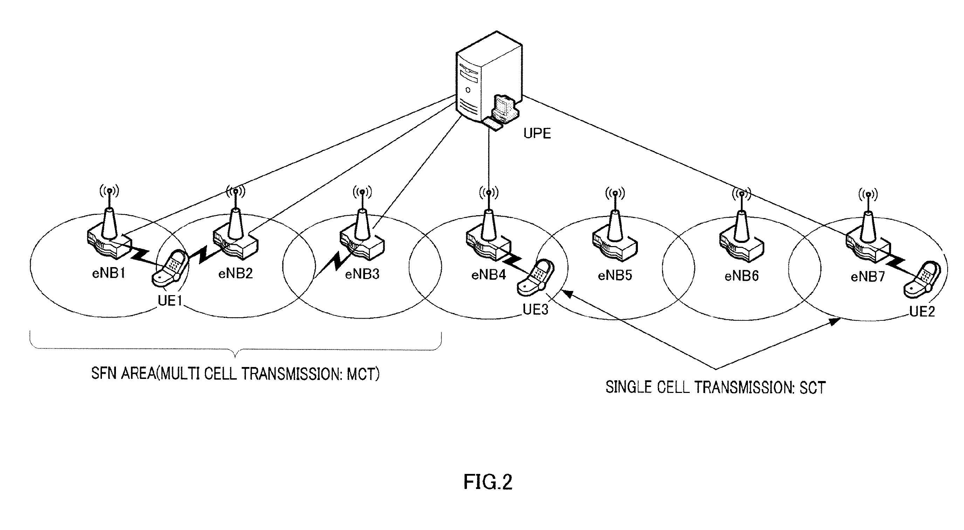

FIG.2 shows a conceptual diagram of the two transfer methods. The first one is called "single cell transmission (SCT)" as shown on the right side of FIG.2, which performs counting to check the presence/absence of users and performs data transmission only to cells where there are users. Furthermore, when quality deteriorates in cell edges or the like, SCT performs retransmission or changes the modulation scheme to thereby improve received quality of users.

The second one is called "multi-cell transmission (MCT)" as shown on the left side of FIG.2, whereby a plurality of base stations belonging to the same frequency area (Single Frequency Network: SFN) perform data transmission in synchronization with each other and improve received quality of users through inter-cell diversity combination irrespective of the presence/absence of users.
Non-Patent Document 1: 3GPP TS 23.246 "3rd Generation Partnership Project;Technical Specification Group Services and System Aspects, Multimedia Broadcast/Multicast Service (MBMS), Architecture and functional description", 2006-06
Non-Patent Document 2: 3GPP TS 25.346 "3rd Generation Partnership Project, Technical Specification Group Radio Access Network, Introduction of the Multimedia Broadcast Multicast Service (MBMS) in the Radio Access Network (RAN), Stage 2", 2006-06
Non-Patent Document 3: 3GPP TS 25.331 "3rd Generation Partnership Project, Technical Specification Group Radio Access Network, Radio Resource Control (RRC), Protocol Specification", 2006-06

### Disclosure of Invention

### Problems to be Solved by the Invention

However, the above described method for providing MBMS selects MCT or SCT depending on a service and has the following problems.

In MCT, multimedia data is only transferred to the SFN area, and therefore when the number of users located in the SFN area is small, the amount of data delivered to the cell with no user increases, which may decrease the utilization efficiency of radio resources of the entire network.

Furthermore, in SCT, counting is performed to transfer data only to a specific user group, but with this counting, the user needs to establish an RRC connection with Node B and thereby consumes the battery. For this reason, when there are many users in a given area, users exist in most cells in the area and the amount of battery consumption of UEs may increase by the amount corresponding to unnecessary counting compared to MCT.

It is therefore an object of the present invention to provide a core network apparatus, radio communication base station apparatus and radio communication method for improving the utilization efficiency of radio resources of an entire network without increasing battery consumption of UEs.

### Means for Solving the Problem

The core network apparatus of the present invention adopts a configuration including a user number counting section that counts the number of users joining a multimedia broadcast/multicast service (MBMS) on a per tracking area basis, a user number comparing section that compares the number of users counted, with a predetermined threshold, so as to select, when the number of users is equal to or greater than the threshold, multi-cell transmission whereby a plurality of radio communication base station apparatuses belonging to an identical frequency area transfer MBMS data in synchronization with each other, and select, when the number of users is less than the threshold, single cell transmission whereby a single radio communication base station apparatus accommodating users joining the MBMS within a cell transfers MBMS data, and a reporting section that reports one of multi-cell transmission and single cell transmission selected, to a radio communication base station apparatus under control.

The radio communication base station apparatus of the present invention adopts a configuration including an acquisition section that acquires from a core network apparatus a command for one of multi-cell transmission whereby a plurality of radio communication base station apparatuses belonging to an identical frequency area transfer multimedia broadcast/multicast service (MBMS) data in synchronization with each other, and single cell transmission whereby a single radio communication base station apparatus including users joining the MBMS within a cell transfers the MBMS data, a counting section that performs counting about a cell under control of the radio communication base station apparatus only when a single cell transmission command is acquired, and a transfer section that transfers the MBMS data in a cell where there are users according to the counting result.

The radio communication method of the present invention includes a user number counting step of a core network apparatus counting the number of users joining a multimedia broadcast/multicast service (MBMS) on a per tracking area basis, a user number comparing step of comparing the number of users counted, with a predetermined threshold, so as to select, when the number of users is equal to or greater than the threshold, multi-cell transmission whereby a plurality of radio communication base station apparatuses belonging to an identical frequency area transfer MBMS data in synchronization with each other, and select, when the number of users is less than the threshold, single cell transmission whereby a single radio communication base station apparatus accommodating a user joining the MBMS within a cell transfers MBMS data, a reporting step of reporting one of multi-cell transmission and single cell transmission selected, to radio communication base station apparatuses under control of the core network apparatus, an acquiring step of a radio communication base station apparatus acquiring a command for one of multi-cell transmission and single cell transmission from the core network apparatus, a counting step of counting about the cell under control of the radio communication base station apparatus only when a single cell transmission command is acquired, and a transfer step of transferring MBMS data in a cell where there are users according to the counting result.

### Advantageous Effect of the Invention

According to the present invention, it is possible to improve the utilization efficiency of radio resources of an entire network without increasing battery consumption of UEs.

### Brief Description of Drawings

FIG.1 shows a reference architecture that supports MBMS on a 3GPP UMTS network;
FIG.2 conceptually shows multi-cell transmission and single cell transmission;
FIG.3 shows a network configuration according to Embodiment 1 of the present invention;
FIG.4 is a block diagram showing a configuration of the MME shown in FIG.3;
FIG.5 is a block diagram showing a configuration of the UPE shown in FIG.3;
FIG.6 is a sequence diagram showing a procedure for joining a multicast subscription group;
FIG.7 is a sequence diagram showing a session start procedure;
FIG.8 is a sequence diagram showing a procedure for mode switching from SCT to MCT;
FIG.9 is a block diagram showing a configuration of an eNB according to Embodiment 1 of the present invention;
FIG.10 is a flowchart showing a recounting procedure in an eNB according to Embodiment 2 of the present invention;
FIG.11 is a block diagram showing a configuration of the eNB according to Embodiment 2 of the present invention;
FIG.12 is a block diagram showing a configuration of a UPE according to Embodiment 3 of the present invention;
FIG.13 is a sequence diagram showing a session start procedure according to Embodiment 3 of the present invention;
FIG. 14 is a sequence diagram showing an inquiry about the MBMS delivery situation between eNBs according to Embodiment 4 of the present invention;
FIG.15 is a block diagram showing a configuration of a UE according to Embodiments 5 and 6 of the present invention; and
FIG.16 is a block diagram showing a configuration of an eNB according to Embodiments 5 and 6 of the present invention.

### Best Mode for Carrying Out the Invention

Hereinafter, embodiments of the present invention will be explained in detail with reference to the accompanying drawings.

### (Embodiment 1)

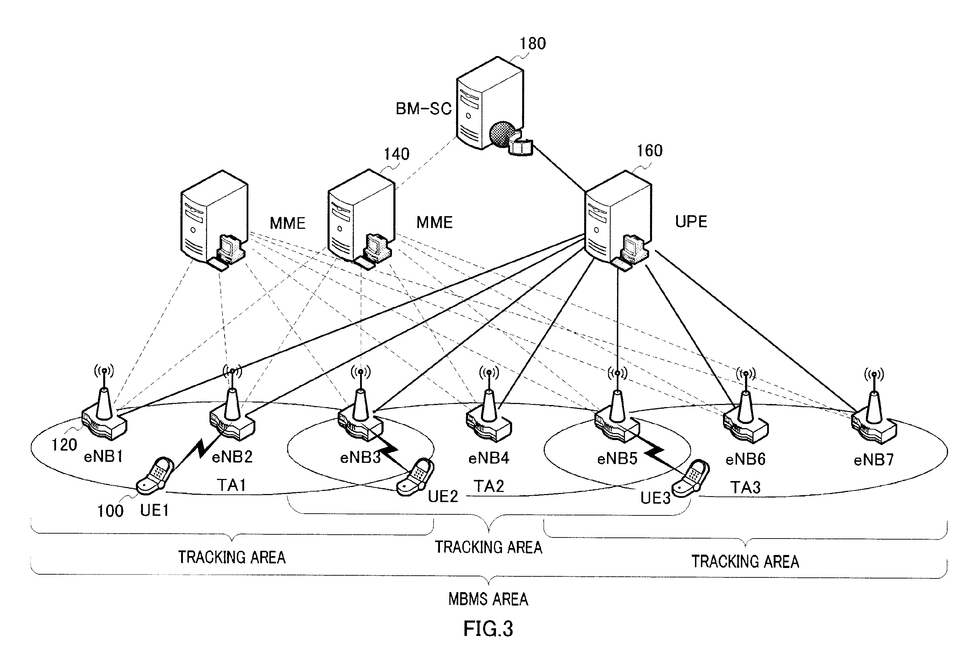

FIG.3 shows a network configuration according to Embodiment 1 of the present invention. The network shown in FIG.3 is comprised of terminal (User Equipment: UE) 100, radio base station apparatus (Evolved Node B: eNB) 120, mobility management apparatus (Mobility Management Entity: MME) 140, userplaneapparatus (User Plane Entity: UPE) 160 and broadcast/multicast service center (Broadcast Multicast Service Center: BM-SC) 180, and eNB 120, MME 140 and UPE 160 are connected via an IP network respectively.

eNB 120 is in charge of allocation and management of radio resources, receives information transferred from the physical layer of UE 100 via the uplink, and, meanwhile, transfers data to UE 100 via the downlink. eNB 120 assumes a role as an access point of the radio access network for UE 100.

MME 140 manages the location of UE 100 on a per tracking area basis (TA) and also performs signaling about the setting, correction and release of RAB jointly with UE 100. MME 140 stores a context assigned in a network connection procedure of UE 100 and associated with MBMS of UE 100. A plurality of MMEs 140 exist in a given MBMS area and MME to which users are connected differs from one user to another.

UPE 160 plays a role as gateway with respect to an outside network, transfers a downlink packet to an eNB to which UE 100 is connected according to the setting of RAB and transfers an uplink packet to an appropriate outside network according to the destination address of a packet. Only one UPE 160 exists within a given MBMS area for each MBMS and stores contexts associated with MBMS.

BM-SC 180 is located between an MBMS content server and UPE 160 and transfers information about the session type, the start and end of a service and MBMS data to UPE 160.

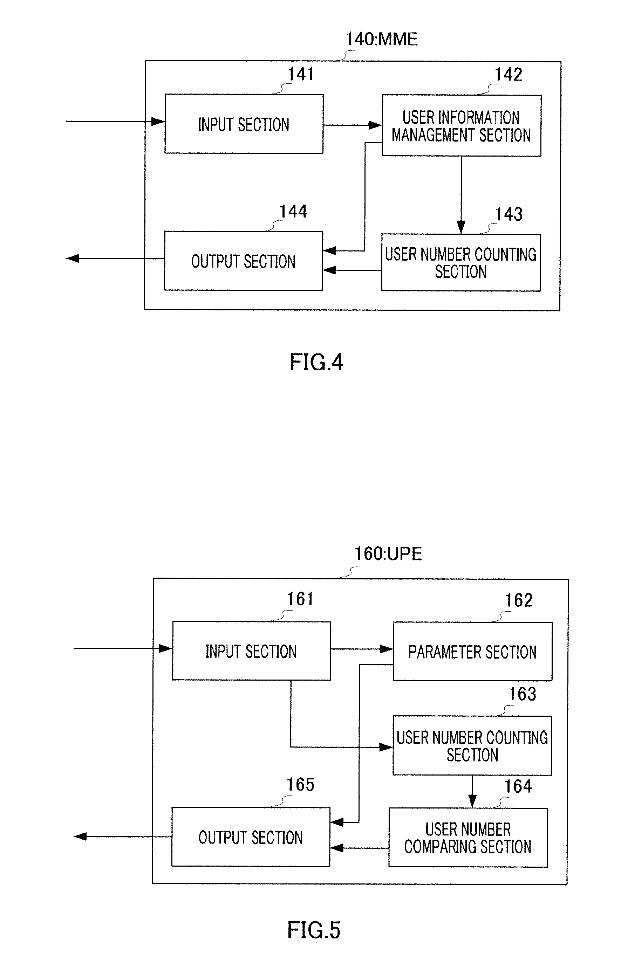

FIG.4 is a block diagram showing a configuration of MME 140 shown in FIG.3. Input section 141 in FIG.4 reports signals inputted from BM-SC 180, UPE 160 and eNB 120 to user information management section 142.

User information management section 142 compares the MBMS reception performance of UE 100 with the performance of UE 100 included in the MBMS registration response reported from BM-SC 180 and required for the corresponding service. When this comparison result shows that the MBMS reception performance of UE 100 exceeds the performance of UE 100 required for the service, the service and an identifier for the tracking area to which UE 100 belongs are reported to user number counting section 143. When the MBMS reception performance of UE 100 falls below the performance of UE 100 required for the service, suspension of the processing is reported to BM-SC 180 and UE 100.

User number counting section 143 counts the number of joining users, per service, on a per tracking area basis and updates the number of users according to the service and the tracking area identifier reported from user information management section 142. The updated number of users is outputted to output section 144. In this way, MME 140 can count the number of users using location registrations of UEs as substitutes.

Output section 144 includes the number of users outputted from user number counting section 143 in an MBMS registration update and sends out the MBMS registration update to UPE 160.

FIG.5 is a block diagram showing a configuration of UPE 160 shown in FIG.3. In FIG.5, input section 161 reports parameter section 162 and user number counting section 163 of the signals inputted from BM-SC 180, MME 140 and eNB 120. Especially, input section 161 reports the number of MBMS users on a per tracking area basis for each service included in the MBMS registration update to user number counting section 163.

Parameter section 162 manages various parameters related to data paths and outputs the service data inputted from BM-SC 180 from output section 165 according to the parameter setup.

User number counting section 163 counts the number of joining users, per service, on a per tracking area basis. Since a plurality of MMEs 140 exist in the MBMS area, the number of users under control of UPE 160 is a total value of the numbers of users reported from the respective MMEs. Therefore, UPE 160 can know the number of users joining the service that exist in the MBMS area on a per tracking area basis. User number counting section 163 having received the MBMS registration update updates the number of users joining the service and outputs the updated number of users to user number comparing section 164.

User number comparing section 164 compares the number of users outputted from user number counting section 163 with a predetermined threshold for each tracking area. When the comparison result shows that the number of users is equal to or greater than the threshold, user number comparing section 164 selects MCT as a transmission mode in the tracking area or selects SCT when the number of users is less than the threshold. An identifier indicating the selectedMCT or SCT is outputted to output section 165.

Output section 165 as a reporting section outputs the service data outputted from parameter section 162 and the identifier indicating MCT or SCT outputted from user number comparing section 164 to eNB 120.

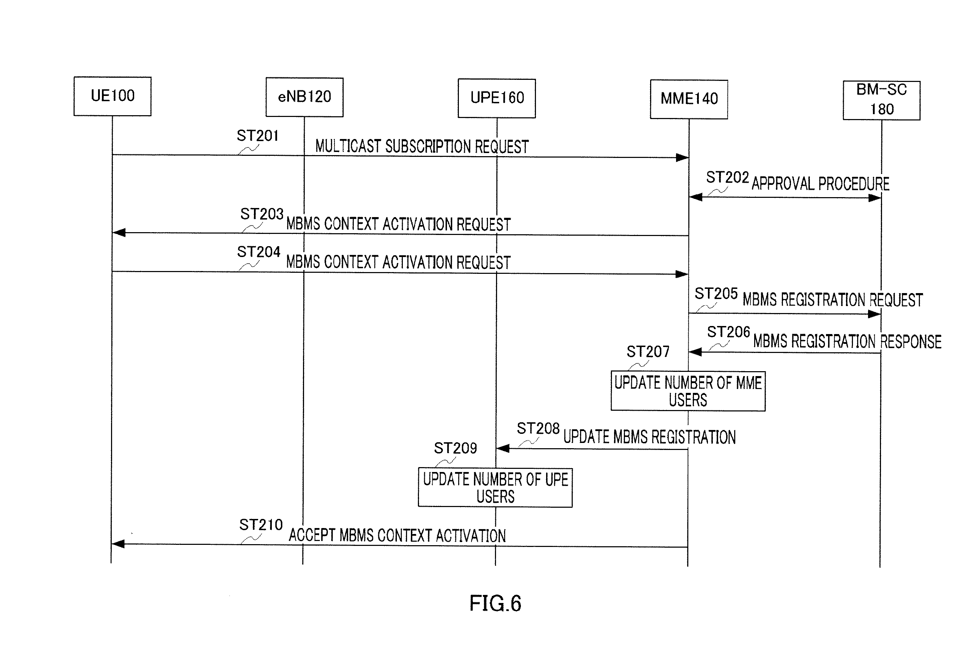

Next, a procedure for a user to join a multicast subscription group will be explained. FIG. 6 is a sequence diagram showing a procedure for joining a multicast subscription group.

In step (hereinafter abbreviated as "ST") 201, UE 100 which has received a service announcement sends out a multicast subscription request to MME 140. This multicast subscription request includes an identifier indicating a multicast group UE 100 wants to join.

In ST 202, MME 140 having received the multicast subscription request performs a procedure for approval of the user jointly with BM-SC 180. This approval procedure is conducted based on the user's subscriber contract information and judges whether or not the user can receive a service correctly.

When the approval procedure is completed successfully, MME 140 sends out a request for MBMS context activation to UE 100 in ST 203.

In ST 204, UE 100 having received the MBMS context activation request sends out an MBMS context activation request to MME 140. The MBMS context activation request includes performance or the like to receive MBMS of UE 100 itself.

When UE 100 is the first to join the multicast group of the service, MME 140 having received the MBMS context activation request sends out an MBMS registration request to BM-SC 180 in ST 205. When UE 100 is not the first to join the multicast group of the service, the processing in ST 205 and ST 206 will not be performed. The MBMS registration request includes an identifier of UPE 160 to deliver MBMS data.

In ST 206, BM-SC 180 having received the MBMS registration request transmits an MBMS registration response including the performance of UE 100 required for the service to MME 140.

In ST 207, MME 140 counts the number of joining users, per service, on a per tracking area basis and updates the number of MME users. In ST 208, MME 140 sends out the MBMS registration update to UPE 160. The MBMS registration update includes the updated number of MBMS users on a per tracking area basis.

In ST 209, UPE 160 counts the number of users joining the service who exist within the MBMS area on a per tracking area basis and updates the number of UPE users. In ST 210, MME 140 transmits acceptance of MBMS context activation to the UE.

The processing described so far completes the procedure for the user to join the multicast subscription group. The number of MME users is also updated likewise when the user leaves the multicast group or when the tracking area of UE 100 is updated and the update result is reported to UPE 160 and UPE 160 also updates the number of UPE users.

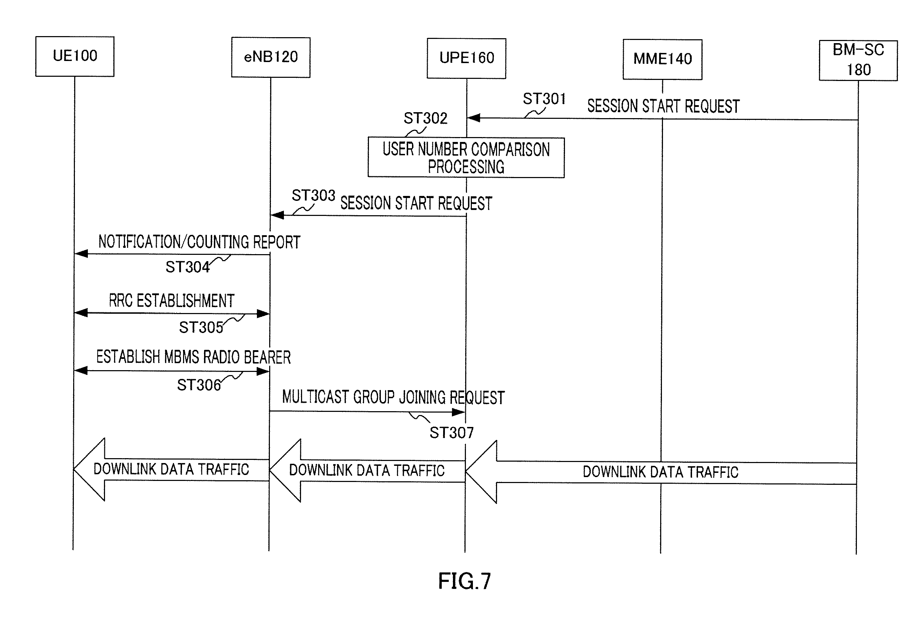

Next, the session start procedure will be explained using FIG.7. Upon detecting the start of a given MBMS service, BM-SC 180 sends out a session start request to UPE 160 in ST 301.

In ST 302, user number comparing section 164 of UPE 160 having received the session start request compares the number of users joining the service who exist within the MBMS area with a predetermined threshold for each tracking area. When the number of joining users is equal to or greater than the threshold, MCT is selected as the transmission mode in the tracking area and when the number of joining users is less than the threshold, SCT is selected.

When MCT is selected, that is, when there are many users in each tracking area, service notification is sent to eNB 120 and UE 100 via output section 165 in ST 303 and ST 304, UE 100 is enabled to receive the service no matter where UE 100 is located in the tracking area and will not require any subsequent processing.

On the other hand, when SCT is selected, that is, when there are only a few users in each tracking area, user number comparing section 164 executes a procedure to check the presence of UEs and counting in the entire tracking area in ST 303 and ST 304 to deliver MBMS user data only to eNB 120 in which users exist.

The session start request in ST 303 includes an identifier indicating MCT or SCT, and eNB 120 having received the session start request thereby decides whether to perform service notification or counting. Furthermore, likewise, the notification/counting report in ST 304 also includes information as to whether or not to perform counting and UE 100 decides whether or not to respond to the counting.

Upon receiving information that counting is being performed about the corresponding service from the service notification on MBMS, UE 100 sets up an RRC connection in eNB 120 in ST 305 to report to eNB 120 that UE 100 wants to receive the corresponding MBMS. Here, using the RRC connection request message, UE 100 reports to eNB 120 that UE 100 wants to receive the corresponding MBMS.

By recognizing the UE that transferred the RRC connection request message, eNB 120 recognizes the presence of the user who requests the specific MBMS within the cell and establishes an MBMS radio bearer in ST 306 when at least one user exists.

In ST 307, eNB 120 sends out a multicast group joining request to UPE 160 to construct an IP multicast tree in the IP network between eNB 120 and UPE 160.

Each IP router and UPE 160, which have received the multicast group joining request, store output interfaces where users joining the service exist and thereby transfer the MBMS data only to the necessary output interfaces.

The operation described so far completes a series of session start procedures, and the MBMS data outputted from BM-SC 180 is sent to UPE 160, the MBMS data is sent from UPE 160 only to eNB 120 in which MBMS users exist and finally sent to UE 100 joining the multicast group.

Next, the maintenance of the delivery path of the MBMS data set up by the above described session start will be explained. The RRC connection between UE 100 and eNB 120 established in ST 305 of the session start procedure is limited to the control plane that transmits/receives only control signals.

Limiting the RRC connection to the control plane refers to a state in which only the control plane is active, and refers to a state in which only the entities related to radio link control (RLC) on transmission/reception of RRC messages and media access control (MAC) are included and neither reporting (CQI reporting) of channel quality necessary for transmission/reception of the user plane data of UE 100 nor monitoring or the like of the downlink common control channel, is performed.

Therefore, UE 100 performs no transmission/reception of signals other than reception of control signals related to MBMS and service data unless UE 100 moves, and therefore UE 100 can suppress battery consumption to a low level. Furthermore, the MBMS data is intermittently received (DRX) at an interval appropriate for the corresponding MBMS and it is thereby possible to further reduce battery consumption.

By the way, the state in which only the control plane is active is limited to between eNB 120 and UE 100 and no information is supplied to MME 140 which performs position control over UE 100, and therefore MME 140 continues position control over UE 100 on a per tracking area basis.

eNB 120 can perform position control over UE 100, on a per cell basis to maintain the RRC connection with UE 100. Therefore, when UE 100 moves to another neighboring eNB, eNB 120 executes a normal handover procedure and causes the RRC connection with UE 100 to be transferred to the target eNB. In this way, the target eNB detects that the MBMS user has moved to come under control of the eNB, outputs, if no such service has been provided, a multicast group joining request, and provides a new service. Furthermore, if there is no other UE 100 joining the multicast group, the source eNB declares withdrawal from the multicast group to UPE 160.

Normally, UE 100 in the active state measures the received quality of the neighboring cell and reports the measurement result to eNB 120 on a regular basis or for each event.

Here, suppose UE 100 is located in the vicinity of the boundary with the neighboring cell. eNB 120 having received the neighboring cell received quality measurement result reported from UE 100 detects that UE 100 is located in the vicinity of the boundary with the neighboring cell.

Generally, in the case of SCT, received quality of a user located in cell edges is known to deteriorate. Therefore, when a user is located in cell edges, the mode is changed from SCT to MCT and inter-cell diversity combination is performed.

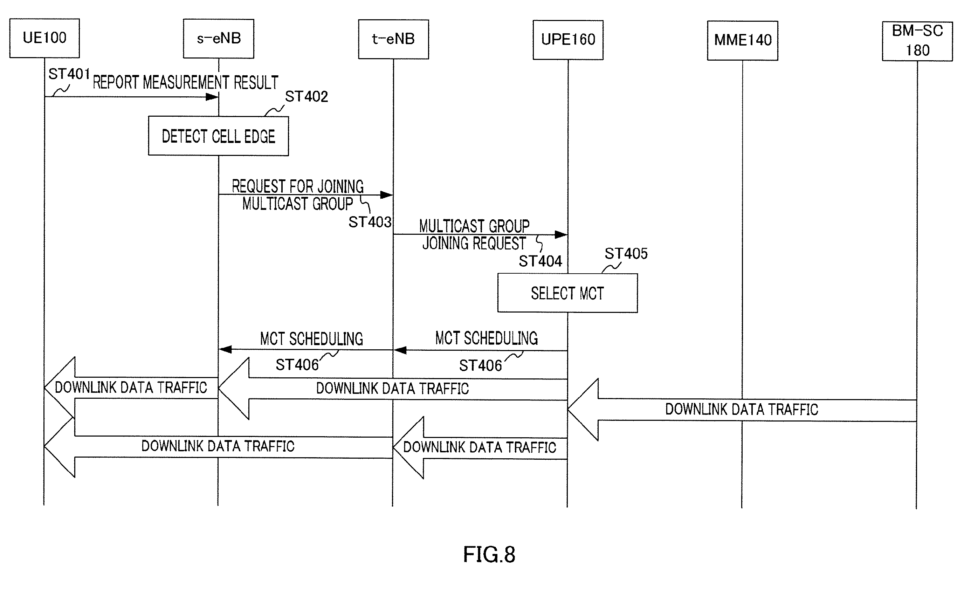

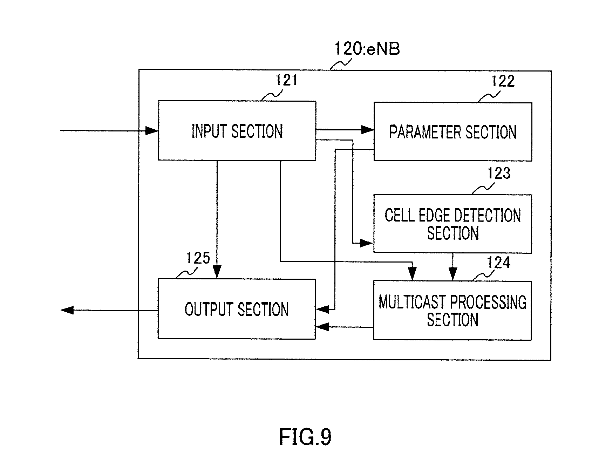

FIG.8 is a sequence diagram showing a procedure for mode switching from SCT to MCT, and FIG.9 is a block diagram showing the configuration of eNB 120 according to Embodiment 1 of the present invention. In FIG.8, in ST 401, UE 100 measures received quality in nearby cells under predetermined conditions and reports the measurement result to s-eNB (i.e. source eNB).

In ST 402, the s-eNB having received the measurement result detects that UE 100 is located in the boundary with a given neighboring cell based on the measurement result, and in ST 403, the s-eNB sends out a request for joining the multicast group to a t-eNB (i.e. target eNB).

In ST 404, the t-eNB having received the multicast group joining request sends out, when there is a resource for the t-eNB to join the appropriate MBMS, the multicast group joining request to UPE 160 via output section 125. The multicast group joining request includes an identifier of the s-eNB and information indicating switching to MCT.

In ST 405, UPE 160 having received the multicast group joining request switches the transmission mode from SCT to MCT, performs scheduling so that the s-eNB and t-eNB can output data in synchronization with each other in ST 406, and reports the scheduling result to the s-eNB and t-eNB respectively.

Parameter sections 122 of the s-eNB and t-eNB which have received the scheduling result store the reported scheduling information and reports the scheduling information to output section 125. Output sections 125 of the s-eNB and t-eNB send out MBMS data at timings defined respectively and UE 100 receives combined signals from a plurality of cells, and the received quality thereby improves.

Here, the configuration of above described eNB 120 will be explained. In FIG.9, input section 121 reports signals inputted from UE 100, MME 140, UPE 160 and eNB 120 to parameter section 122, cell edge detection section 123 and multicast processing section 124.

Parameter section 122 manages various parameters set through signaling with UE 100, MME 140, UPE 160 and eNB 120 and MBMS data is outputted from output section 125 as a transfer section according to parameters specified by parameter section 122.

Cell edge detection section 123 of the s-eNB having received the measurement result detects that UE 100 is located in the boundary with a given neighboring cell and outputs an identifier of the neighboring cell to multicast processing section 124.

When the own apparatus is the s-eNB, multicast processing section 124 sends out a request for joining the multicast group to the t-eNB that manages the neighboring cell through output section 125 based on the identifier of the neighboring cell outputted from cell edge detection section 123.

Furthermore, when the own apparatus is the t-eNB, multicast processing section 124 receives the group joining request and sends out, when there are resources for joining the MBMS, the multicast group joining request to UPE 160 through output section 125.

In this way, Embodiment 1 counts the number of UEs on which tracking has been conducted for each tracking area including a plurality of cells, selects MCT when the counted number of UEs is equal to or greater than a predetermined threshold, or selects SCT when the counted number of UEs is less than the predetermined threshold, and can thereby appropriately switch between SCT and MCT according to the number of UEs and can thereby reduce unnecessary data delivery by MCT, reduce unnecessary counting by SCT and reduce battery consumption.

In the present embodiment, UPE 160 compares the number of users joining the service that exist in the MBMS area with a predetermined threshold for each tracking area, but the present invention may also be adapted so that a selected specific MME out of the plurality of existing MMEs compares the number of users likewise.

The present embodiment detects that UE 100 is located in the boundary with a given neighboring cell from the received quality measurement result from UE 100, but the present invention may also be adapted so that using a NACK prompting retransmission of lost data sent out to eNB 120 by UE 100 when received quality deteriorates, eNB 120 requests the neighboring cell to join the multicast group upon receiving the NACK.

The present embodiment performs processing of comparing the number of users shown in ST 302 of FIG.7 using the number of UEs on a per tracking area basis, but such processing may also be performed per tracking areas.

### (Embodiment 2)

Embodiment 2 of the present invention will explain a case where SCT is selected, counting is performed and then UE 100 transitions to an idle state again.

Since the network cannot specify the movement of UE 100 in an idle state, recounting (equivalent to counting) is performed on a regular basis to decide whether to maintain or delete the MBMS radio bearer, on a per cell basis.

When counting is performed, since response messages of UEs requesting MBMS are generally concentrated on an upward channel simultaneously, interference with and load on the uplink increase, a probability factor (PF) is provided. Simultaneous responses are avoided by only UEs that have produced random numbers which are equal to or lower than the PF value transmitting an RRC response message.

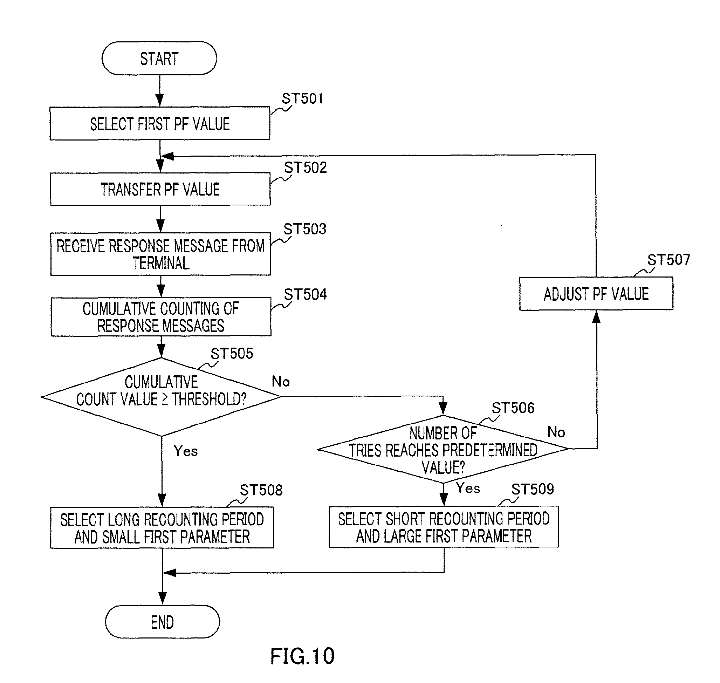

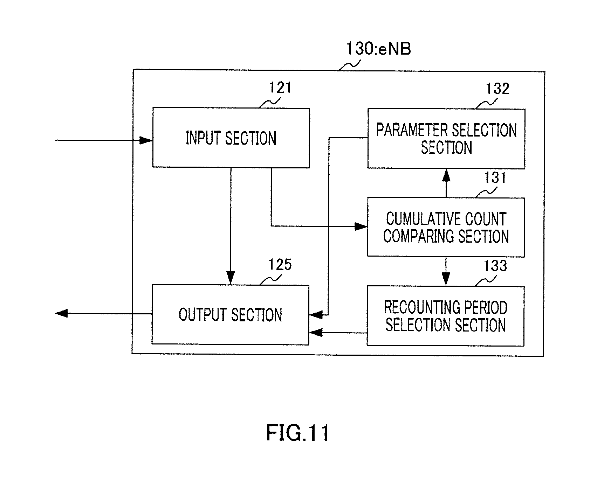

FIG.10 is a flowchart showing a recounting procedure by eNB 130 according to Embodiment 2 of the present invention. Furthermore, FIG.11 is a block diagram showing a configuration of eNB 130 according to Embodiment 2 of the present invention. Hereinafter, the recounting procedure will be explained using these figures.

eNB 130 reports an input signal from UE 100 to cumulative count comparing section 131 through input section 121 as an acquisition section.

In ST 501, parameter selection section 132 sets a first PF value (parameter) upon starting a recounting procedure, and in ST 502, transmits the first PF value to UE 100 via output section 125 through a notification/counting report. UE 100 having received the PF value compares the random number generated by UE 100 itself with the PF value, transmits a response message when the random number is equal to or below the PF value or waits until the next PF value is received when the random number is greater than the PF value.

In ST 503, input section 121 of eNB 130 receives the response message from UE 100 and reports the received response message to cumulative count comparing section 131.

In ST 504, cumulative count comparing section 131 as a counting section counts the cumulative number of received response messages and compares in ST 505 whether the cumulative count value is equal to or greater than a predetermined threshold. The process moves to ST 508 when the cumulative count value is equal to or greater than the threshold (YES) or moves to ST 506 when the cumulative count value is less than the threshold (NO).

In ST 506, cumulative count comparing section 131 decides whether or not the number of tries of ST 502 to ST 505 has reached a predetermined number of times (predetermined value). The process moves to ST 509 when the number of tries has reached the predetermined value (Yes) or moves to ST 507 when the number of tries has not reached the predetermined value (No).

Since the number of tries has not reached the predetermined value in ST 507, parameter selection section 132 selects a PF value greater than the PF value used this time. Since a PF value greater than the value this time is selected on the next try, more UEs 100 are expected to transmit a response message. After a number of tries, if the decision result in ST 505 shows that the cumulative count value is equal to or greater than the threshold, cumulative count comparing section 131 commands recounting period selection section 133 to select a recounting period and commands parameter selection section 132 to select the first PF value.

In ST 508, eNB 130 knows that there are relatively many MBMS users in the cell under control and since the probability that certain users may continue to stay in the cell is high in the cell where there are many users, recounting period selection section 133 sets a longer recounting period. This makes it possible to reduce battery consumption of UE 100. Furthermore, for the next recounting, parameter selection section 132 sets the first PF value to a small value. This can avoid congestion of the uplink.

In ST 506, when the number of tries is decided to have reached the predetermined value, in ST 509, cumulative count comparing section 131 commands recounting period selection section 133 to select a recounting period or commands parameter selection section 132 to select the first PF value next time. eNB 130 knows that there are only a few MBMS users in the cell under control and since all users may go out of the cell where there are only a few users, recounting period selection section 133 sets a shorter recounting period (default value). This makes it possible to instantaneously detect a case where the number of users in the cell is reduced to 0 and stop delivery of MBMS data to the cell to thereby improve the utilization efficiency of radio resources on the entire network. Furthermore, since the probability that the uplink may be congested in the next recounting is low, parameter selection section 132 sets the first PF value to a greater value. This makes it possible to reduce the time required to complete recounting.

In this way, Embodiment 2 reduces, when the number of users in the cell is decided to be large according to the recounting conducted in SCT, the battery consumption of each UE by extending the recounting period and can reduce interference with and load on the uplink due to simultaneous responses by reducing the first PF value. On the other hand, when the number of users in the cell is decided to be small, Embodiment 2 shortens the recounting period, and can thereby instantaneously detect the case where the number of users in the cell is reduced to 0 and improve the utilization efficiency of radio resources on the entire network by stopping delivery of MBMS data to the corresponding cell and shorten the time required to complete recounting by increasing the first PF value.

The present embodiment has explained two cases where the number of users in the cell is large and small, but the present invention is not limited to this and it is also possible to control the recounting period and PF value in two or more cases of the number of users in the cell.

### (Embodiment 3)

Embodiment 3 of the present invention will explain a case where SCT is selected, counting is performed and a transmission mode is then selected again according to the distribution of eNBs 120 where MBMS users exist.

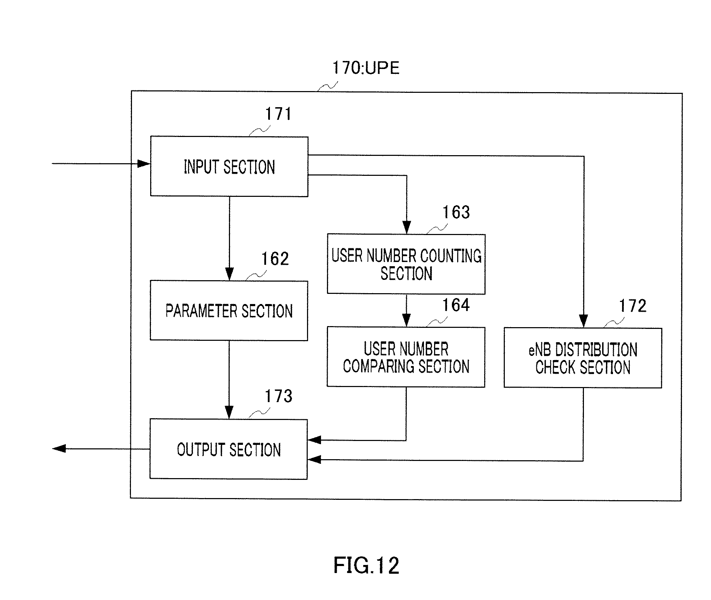

FIG.12 is a block diagram showing the configuration of UPE 170 according to Embodiment 3 of the present invention. However, parts in FIG.12 common to those in FIG.5 will be assigned the same reference numerals as those in FIG.5 and detailed explanations thereof will be omitted.

In FIG.12, input section 171 reports signals inputted from BM-SC 180, MME 140 and eNB 120 to parameter section 162, user number counting section 163 and eNB distribution check section 172. Especially, input section 171 reports the number of MBMS users on a per tracking area basis per service included in an MBMS registration update to user number counting section 163. Furthermore, input section 171 also reports an eNB identifier included in a multicast group joining request and indicating eNB 120 in which MBMS users exist to eNB distribution check section 172.

eNB distribution check section 172 decides a distribution of eNBs 120 where MBMS users exist, that is, a distribution with respect to the entire tracking area based on eNB identifiers outputted from input section 171. When the decision result shows that the distribution of eNBs 120 where MBMS users exist satisfies a predetermined condition, eNB distribution check section 172 selects MCT as the transmission mode in the tracking area or selects SCT when the condition is not satisfied. An identifier indicating the selected MCT or SCT is outputted to output section 173.

Output section 173 as a reporting section outputs the service data outputted from parameter section 162, identifier indicating MCT or SCT outputted from user number comparing section 164 and identifier indicating MCT or SCT outputted from eNB distribution check section 172 to eNB 120.

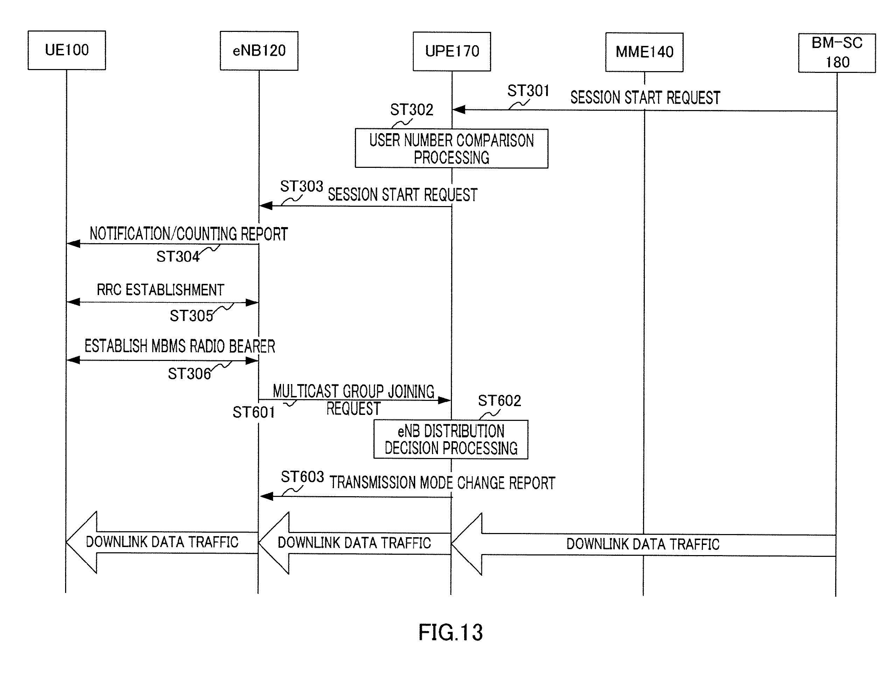

Next, a session start procedure according to Embodiment 3 of the present invention will be explained using FIG.13. However, parts in FIG.13 common to those in FIG.7 will be assigned the same reference numerals as those in FIG.7 and detailed explanations thereof will be omitted.

In FIG.13, in ST 601, eNB 120 sends out a multicast group joining request to UPE 170 in order to construct an IP multicast tree on an IP network between eNB 120 and UPE 170. In that case, eNB 120 includes the identifier indicating itself in the multicast group joining request as an eNB identifier.

Each IP router having received the multicast group joining request stores output interfaces where there are users joining the service.

In ST 602, UPE 170 having received the multicast group joining request temporarily stores the eNB identifier included in the multicast group joining request in eNB distribution check section 172 and acquires multicast group joining request from all eNBs 120 where MBMS users exist according to the count this time. Here, eNB distribution check section 172 calculates the ratio of the number of eNBs where MBMS users exist to the total number of eNBs in the entire tracking area. When the ratio is equal to or greater than a predetermined threshold, eNB distribution check section 172 selects MCT as the transmission mode in the tracking area or selects SCT when the ratio is less than the threshold.

When MCT is selected, the process moves to ST 603 and when SCT is selected, UPE 170 stores the output interfaces where there are users joining the service. When SCT is consecutively selected, a series of session start procedure steps is completed, the MBMS data outputted from BM-SC 180 is sent to UPE 170, sent from UPE 170 to only eNBs 120 where MBMS users exist and finally sent to UE 100 joining the multicast group.

UPE 170 has already reported to eNB 120 in ST 303 that SCT was selected. Therefore, in ST 603, UPE 170 sends a transmission mode change report indicating the switching from SCT to MCT to all eNBs 120 in the tracking area.

The transmission mode change report in ST 603 includes information about an identifier indicating MCT or SCT and indicating whether or not to perform counting and eNB 120 having received the transmission mode change report thereby decides whether or not to change the transmission mode and also decides whether or not to on a regular basis perform counting from this reception onward.

This completes a series of session start procedure steps and when there are only a few users per tracking area, yet a few MBMS users are uniformly distributed with respect to the tracking area, MCT is selected finally, and therefore UE 100 can receive the service regardless of locations in the tracking area.

As explained in Embodiment 1, since the number of users per tracking area is equal to or greater than a threshold, counting need not be performed when MCT is selected, but if MCT is selected because the number of users per tracking area is less than the threshold and a few MBMS users are distributed uniformly with respect to the tracking area, the ratio of the number of eNBs where MBMS users exist to the total number of eNBs in the entire tracking area may also change with the movement of UE 100, and therefore counting is performed on a regular basis. That is, the processing in ST 304 to ST 601 shown in FIG.13 is performed on a regular basis. Thus, UPE 170 performs the eNB distribution decision processing in ST 608 every time counting is performed and selects the transmission mode based on the result.

In this way, according to Embodiment 3, even when the number of users per tracking area is less than a threshold, if a few MBMS users are uniformly distributed with respect to the tracking area, switching the transmission mode from SCT to MCT allows the amount of signaling between eNBs and between each eNB and the core network apparatus required for switching the transmission mode from SCT to MCT to be reduced without reducing the utilization efficiency of radio resources.

According to the present embodiment, eNB distribution check section 172 switches the transmission mode based on the ratio of the number of eNBs where MBMS users exist to the total number of eNBs in the entire tracking area, but it is also possible to set up an eNB identifier and information about the actual arrangement of eNBs 120 beforehand, decide the actual distribution situation of eNB 120 where MBMS users exist from the reported eNB identifier and switch the transmission mode.

According to the present embodiment, eNB distribution check section 172 switches the transmission mode from the distribution of eNBs 120 where MBMS users exist when counting is performed, but it is also possible to decide the distribution of eNBs 120 where MBMS users exist based on the results of several counts and switch the transmission mode.

### (Embodiment 4)

Embodiment 4 of the present invention will explain the operation of a cell in cell edges located in the boundary of a tracking area where MCT is selected.

In the cell edge of a cell located in the boundary of a tracking area where MCT is selected, when eNB 120 located in the boundary of the neighboring tracking area (which corresponds to, for example, eNB 3 and eNB 5 in FIG.3) does not provide any service, inter-cell diversity combination may not be successfully realized and the service received quality may deteriorate. Therefore, according to the present embodiment, eNB 120 located in the boundary of a tracking area on a regular basis inquires of N-eNBs 1 to n located in the boundary of the neighboring tracking area about the MBMS delivery situation.

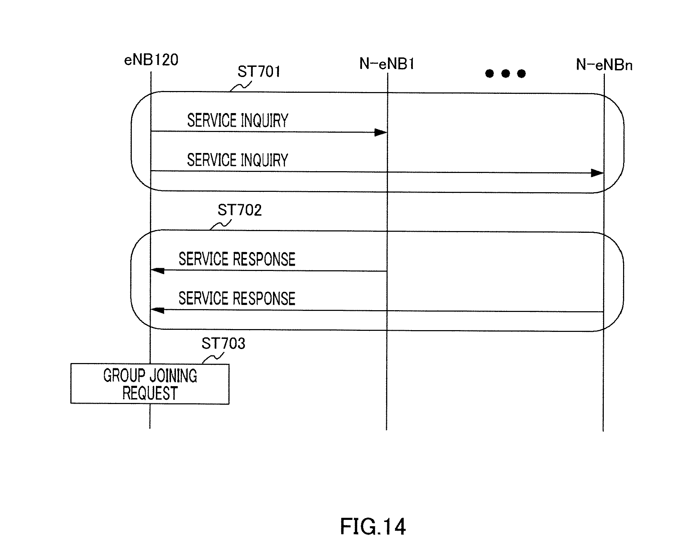

FIG.14 is a sequence diagram showing inquiries of the MBMS delivery situation between eNBs 120 located in the boundary between different tracking areas. Multicast processing section 124 of eNB 120 located in the boundary of tracking areas is provided beforehand with information that the own apparatus is located in the boundary of tracking areas.

In ST 701 in FIG.14, when providing MBMS in an MCT mode, multicast processing section 124 of eNB 120 outputs service inquiries to N-eNBs 1 to n located in the boundary between neighboring tracking areas to inquire about the MBMS delivery situation through output section 125. Service inquiries include service identifiers indicating the corresponding MBMS.

In ST 702, input section 121 of N-eNB 1 to n, having received the service inquiry, outputs a service identifier to multicast processing section 124. Multicast processing section 124 decides the delivery situation of the service specified by the service identifier, includes the result in a service response and outputs the service response to eNB 120 which sent the service inquiry through output section 125.

In ST 703, input section 121 of eNB 120, having received the service responses, outputs the MBMS delivery situations of N-eNBs 1 to n included in the service responses to multicast processing section 124. Multicast processing section 124 decides N-eNBs 1 to n that need to join the corresponding MBMS from the MBMS delivery situations of N-eNBs 1 to n. Here, "N-eNBs 1 to n that need to join the corresponding MBMS" refer to N-eNBs 1 to n neighboring a cell which does not provide the corresponding MBMS and in which there are users requesting MBMS in the neighboring tracking area.

N-eNBs 1 to n that need to join the MBMS and eNB 120 which has specified N-eNBs 1 to n perform the processing in and after ST 403 shown in FIG.8 and thereby complete the joining in the MBMS.

In this way, according to Embodiment 4, eNB 120 located in the boundary of tracking areas on a regular basis inquiries N-eNBs 1 to n located in the boundary between neighboring tracking areas about MBMS delivery situations, causes N-eNBs 1 to n not delivering the MBMS in question to join the multicast group, and can thereby reduce deterioration of service received quality of the cell in the cell edge located in the boundary of tracking areas where MCT is selected.

The present embodiment on a regular basis inquires of N-eNBs 1 to n located in the boundary between neighboring tracking areas about the MBMS delivery situations and thereby decides the necessity for N-eNBs 1 to n to join the MBMS, but it is also possible to cause all MBMS users existing in the cell located in the boundary of tracking areas where MCT is selected to transition to an active state, perform cell edge detection as in the case of Embodiment 2 and thereby cause N-eNBs 1 to n to join the MBMS.

### (Embodiment 5)

Embodiment 5 of the present invention will explain timing UE 100 in an active state in a cell where SCT is selected sends out a measurement report.

UE 100 in an active state in a cell where SCT is selected measures received quality of a neighboring cell and reports the measurement result to eNB 200 on a regular basis or event by event. Hereinafter, a report on a received quality measurement result will be referred to as a "measurement report." In this way, eNB 200 decides at which edge of the cell UE 100 is located and requests the corresponding neighboring cell to join an MCT mode.

Here, the measurement report is sent on a regular basis or event by event irrespective of the reception result of MBMS data, that is, whether or not MBMS data has been received normally. Therefore, UE 100 may send out unnecessary measurement reports and consume the battery uselessly despite the fact that MBMS data has been successfully received. On the contrary, despite the fact that loss of MBMS data has been detected, time is required until the timing a measurement report is sent out and a state of poor received quality may continue.

Therefore, when UE 100 located in cell edges detects data loss of MBMS, the present embodiment supposes that UE 100 sends out a measurement report of the neighboring cell to eNB 200 triggered by NACK transmission for requesting a retransmission of the lost data.

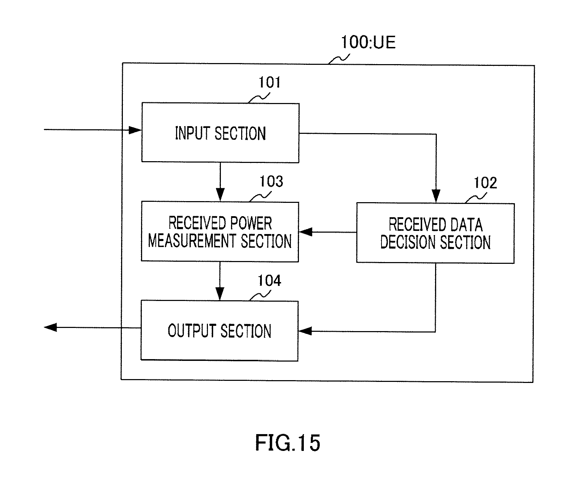

FIG.15 is a block diagram showing a configuration of UE 100 according to Embodiment 5 of the present invention. In FIG.15, input section 101 outputs an MBMS data packet received from eNB 200 to received data decision section 102 and a reference signal received from a neighboring cell to received power measurement section 103 respectively.

Received data decision section 102 decides whether or not the MBMS data packet outputted from input section 101 has been correctly received. When the MBMS data packet has been correctly received, received data decision section 102 transfers the received packet to a higher layer. When the MBMS data packet has not been correctly received, that is, loss of the received data packet is detected, received data decision section 102 creates a NACK message for requesting a retransmission of the lost data, sends out the created NACK message to eNB 200 through output section 104 and requests received power measurement section 103 to send out a measurement report.

Received power measurement section 103 measures received power for each neighboring cell using the reference signal outputted from input section 101, receives the request from received data decision section 102 and sends a measurement report including an identifier of the neighboring cell and the measurement result of received power to eNB 200 through output section 104.

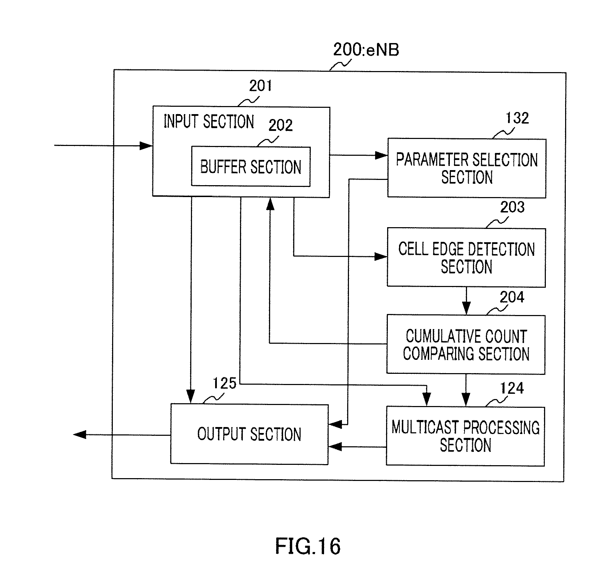

FIG.16 is a block diagram showing a configuration of eNB 200 according to Embodiment 5 of the present invention. However, parts in FIG.16 common to those in FIG.9 will be assigned the same reference numerals as those in FIG.9 and detailed explanations thereof will be omitted.

In FIG.16, input section 201 stores an MBMS data packet received from UPE 160 in buffer section 202. Furthermore, when a NACK requesting a retransmission of lost MBMS data and measurement report are received from UE 100, input section 201 outputs a measurement report to cell edge detection section 203. When a retransmission of a lost MBMS data packet is requested from cumulative count comparing section 204, input section 201 transmits the MBMS data packet stored in buffer section 202 to UE 100 again through output section 125.

Cell edge detection section 203 detects the cell edge bordering on a neighboring cell at which UE 100 which has sent out the measurement report is located based on the measurement report inputted from input section 201 and reports an identifier of the detected neighboring cell to cumulative count comparing section 204.

Cumulative count comparing section 204 compares the number of all users located in the cell edge with a predetermined threshold for each neighboring cell reported from cell edge detection section 203. When the comparison result shows that the number of users is equal to or greater than a threshold, the cumulative count comparing section 204 reports the identifier of the corresponding neighboring cell to multicast processing section 124 or requests, when the number of users is less than the threshold, input section 201 to retransmit an MBMS data packet corresponding to the NACK out of the MBMS data packets stored in buffer section 202.

The operations of cumulative count comparing section 204 after reporting the identifier of the neighboring cell to multicast processing section 124 are the same as the operations in and after ST 403 in FIG.8 and therefore explanations thereof will be omitted.

In this way, according to Embodiment 5, when UE 100 located in cell edges detects loss of an MBMS data packet, UE 100 sends a measurement report of the neighboring cell triggered by NACK transmission requesting a retransmission of the lost data, thereby sends out the measurement report to eNB 200 only in case of necessity, and can thereby suppress the amount of battery consumption of UE 100 to a low level. Furthermore, when there are many users in the vicinity of the cell edge, it is possible to efficiently improve the user's received service quality by switching from SCT to MCT.

The present embodiment has explained on the assumption that a NACK for requesting a retransmission of a lost MBMS data packet and measurement report are transmitted separately, but a NACK and measurement report may also be transmitted as one message.

### (Embodiment 6)

Embodiment 6 of the present invention will explain a method of efficiently counting the number of users existing in the vicinity of cell edges bordering on a specific neighboring cell.

Embodiment 5 compares the number of all users existing in the vicinity of cell edges with a predetermined threshold for each neighboring cell and requests the corresponding neighboring cell to perform switching to MCT when the number of users is equal to or greater than the threshold. However, there exist cell edges corresponding in number to neighboring cells and since it takes time for all users located in the vicinity of the cell edge to uniformly send measurement reports and for the number of users located in the vicinity of the cell edge bordering on a specific neighboring cell to reach the threshold, inefficient retransmissions may be repeated. Therefore, the present embodiment limits transmissions of measurement reports to users located in the vicinity of an edge with a specific neighboring cell.

Hereinafter, a method of sending a measurement report according to the present embodiment will be explained using FIG.15 and FIG.16.

In eNB 200 shown in FIG.16, parameter selection section 132 selects a cell identifier of a neighboring cell at predetermined intervals and transmits the selected cell identifier to UE 100 through output section 125. The cell identifier is used to specify a UE that sends out a measurement report amongst the UEs located in the vicinity of cell edges and have detected loss of MBMS data packets.

In UE 100 shown in FIG.15, input section 101 reports the cell identifier received from eNB 200 to received power measurement section 103. Received data decision section 102 which has detected the loss of the MBMS data packet requests received power measurement section 103 to send out a measurement report.

Received power measurement section 103 decides whether or not information about the neighboring cell corresponding to the cell identifier reported from input section 101 is included in the measurement report to be sent out. When information about the neighboring cells is included, received power measurement section 103 sends out the measurement report to eNB 200 or stops, when information about the neighboring cells is not included, transmission of the measurement report. The subsequent operations of eNB 200 of threshold decision and switching to MCT are the same as those in Embodiment 5, and therefore detailed explanations thereof will be omitted.

In this way, Embodiment 6 authorizes only UEs located in the vicinity of cell edges bordering on a specific neighboring cell out of UEs, which are located in the vicinity of the cell edge and have detected loss of an MBMS data packet, to send a measurement report, and can thereby efficiently count the number of users present in cell edges bordering on the specific neighboring cell and promptly perform switching from SCT to MCT for the corresponding neighboring cell.

According to the present embodiment, parameter selection section 132 selects a cell identifier of a neighboring cell at predetermined intervals, but it is also possible to consecutively select only an identifier of a cell neighboring a cell edge which is predicted to have poor received quality.

The present embodiment authorizes only users located in the vicinity of cell edges bordering on a specific neighboring cell out of the users having detected loss of an MBMS data packet to send a measurement report, but it is also possible to further combine the PFs explained in Embodiment 2 and perform control so as to prevent many measurement reports from being sent out simultaneously.

Also, although cases have been described with the above embodiment as examples where the present invention is configured by hardware, the present invention can also be realized by software.

Each function block employed in the description of each of the aforementioned embodiments may typically be implemented as an LSI constituted by an integrated circuit. These may be individual chips or partially or totally contained on a single chip. "LSI" is adopted here but this may also be referred to as "IC, " "system LSI," "super LSI, " or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No. 2006-229811, filed on August 25, 2006, Japanese Patent Application No. 2006-274080, filed on October 5, 2006 and Japanese Patent Application No. 2006-310271, filed on November 16, 2006, including the specifications, drawings and abstracts, are incorporated herein by reference in their entirety.

### Industry Applicability

The core network apparatus, radio communication base station apparatus and radio communication method according to the present invention can improve the utilization efficiency of radio resources of an entire network without increasing battery consumption of UEs and are applicable to a transmission control system that delivers MBMS.

## Claims

1. A core network apparatus comprising:
a user number counting section that counts a number of users joining a multimedia broadcast multicast service (MBMS) on a per tracking area basis;
a user number comparing section that compares the number of users counted, with a predetermined threshold, so as to select, when the number of users is equal to or greater than the threshold, multi-cell transmission whereby a plurality of radio communication base station apparatuses belonging to an identical frequency area transfer multimedia broadcast multicast service data in synchronization with each other, and select, when the number of users is less than the threshold, single cell transmission whereby a single radio communication base station apparatus accommodating users joining the multimedia broadcast multicast service in a cell, transfers multimedia broadcast multicast service data; and
a reporting section that reports one of multi-cell transmission and single cell transmission selected, to a radio communication base station apparatus under control.

2. The core network apparatus according to claim 1, further comprising a distribution check section that selects, when the user number comparing section selects single cell transmission, a transmission mode based on a situation of distribution of radio communication base station apparatuses subject to single cell transmission.

3. The core network apparatus according to claim 2, where in the distribution check section selects multi-cell transmission when a ratio of the number of radio communication base station apparatuses subject to single cell transmission to a total number of radio communication base stations per tracking area is equal to or greater than a predetermined threshold.

4. A radio communication base station apparatus comprising:
an acquisition section that acquires from a core network apparatus a command for one of multi-cell transmission whereby a plurality of radio communication base station apparatuses belonging to an identical frequency area transfer multimedia broadcast multicast service (MBMS) data in synchronization with each other and single cell transmission whereby a single radio communication base station apparatus accommodating users joining the multimedia broadcast multicast service within a cell transfers the multimedia broadcast multicast service data;
a counting section that performs counting about a cell under control of the radio communication base station apparatus only when a single cell transmission command is acquired; and
a transfer section that transfers the multimedia broadcast multicast service data in a cell where there are users according to the counting result.

5. The radio communication base station apparatus according to claim 4, wherein, upon acquiring a command for single cell transmission, the counting section causes the radio communication terminal apparatus inside a cell under control of the radio communication base station apparatus to transition into an active mode for only a control channel and counts the number of users, on a per cell basis.

6. The radio communication base station apparatus according to claim 4, further comprising:
a detection section that acquires a received quality measurement result in a nearby cell measured by a radio communication terminal apparatus and detects a radio communication terminal apparatus located in cell edges based on the acquired received quality measurement result; and
a multicast processing section that requests, when detecting the radio communication terminal apparatus located in the cell edge, a neighboring cell forming the cell edge, to join multimedia broadcast multicast service.

7. The radio communication base station apparatus according to claim 4, further comprising:
a recounting period selection section that selects a recounting period, which is an interval until next counting is performed; and
a parameter selection section that selects a response probability, which is a condition for the radio communication terminal apparatus that requests multimedia broadcast multicast service to send a response message, wherein:
upon acquiring a command for single cell transmission, the counting section controls the recounting period selection section and the parameter selection section, so as to extend a recounting period and reduce a response probability when the number of users inside the cell is equal to or greater than a predetermined threshold or shorten the recounting period and increase the response probability when the number of users inside the cell is less than the predetermined threshold.

8. The radio communication base station apparatus according to claim 4, further comprising a multicast processing section that inquires of other radio communication base station apparatuses located in the boundary between neighboring tracking areas about the multimedia broadcast multicast service delivery situation and requests the other radio communication base station apparatuses that do not provide multimedia broadcast multicast service to join multimedia broadcast multicast service.

9. The radio communication base station apparatus according to claim 4, further comprising:
a detection section that detects, upon acquiring a negative acknowledgement for requesting a retransmission of lost multimedia broadcast multicast service data and a received quality measurement result in a neighboring cell measured by the radio communication terminal apparatus, a radio communication terminal apparatus located in cell edges based on the acquired received quality measurement result;
a counting section that counts the number of users located in the cell edge detected by the detection section for each neighboring cell;
a multicast processing section that requests, when the number of users counted for each neighboring cell is equal to or greater than a predetermined threshold, the neighboring cell to join multimedia broadcast multicast service; and
a retransmission section that retransmits, when the number of users counted for each neighboring cell is less than the predetermined threshold, the multimedia broadcast multicast service data requested by the negative acknowledgment.

10. The radio communication base station apparatus according to claim 9, wherein the counting section counts the number of users located in cell edges bordering on a specific neighboring cell.

11. A radio communication terminal apparatus comprising:
a data decision section that decides whether or not received multimedia broadcast multicast service data is lost and creates, upon deciding that the multimedia broadcast multicast service data is lost, a negative acknowledgment message for requesting a retransmission of the lost multimedia broadcast multicast service data;
a received power measurement section that measures received power in each neighboring cell; and
a transmission section that transmits the negative acknowledgment message and received power measurement result in each neighboring cell to a radio communication base station apparatus.

12. The radio communication terminal apparatus according to claim 11, wherein the received power measurement section measures received power in a specific neighboring cell.

13. A radio communication method comprising:
counting, by a core network apparatus, a number of users joining a multimedia broadcast multicast service (MBMS) on a per tracking area basis;
comparing, by a core network apparatus, the number of users counted, with a predetermined threshold, so as to select, when the number of users is equal to or greater than the threshold, multi-cell transmission whereby a plurality of radio communication base station apparatuses belonging to an identical frequency area transfer multimedia broadcast multicast service data in synchronization with each other, and select, when the number of users is less than the threshold, single cell transmission whereby a single radio communication base station apparatus accommodating a user joining the multimedia broadcast multicast service within a cell transfers multimedia broadcast multicast service data;
reporting, by a core network apparatus, one of multi-cell transmission and single cell transmission selected, to radio communication base station apparatuses under control of the core network apparatus;
acquiring, by a radio communication base station apparatus, a command for one of multi-cell transmission and single cell transmission, from the core network apparatus,
counting, by a radio communication base station apparatus, about the cell under control of the radio communication base station apparatus only when a single cell transmission command is acquired; and
transferring, by a radio communication base station apparatus, multimedia broadcast multicast service data in a cell where there are users according to the counting result.
